# EUROPEAN PATENT APPLICATION

(11) **EP 1 111 529 A2**
(43) Date of publication of application: **27.06.2001**
(21) Application number: 00311315.6
(22) Date of filing: 18.12.2000
(51) Int. Cl.: G06F 17/60

(54) **Method and apparatus for obtaining components**

(30) Priority: 17.12.1999 US 466262
(71) Applicant: UNITED TECHNOLOGIES CORPORATION, Hartford, CT 06101 (US)
(72) Inventor: Brodersen, Andrew N., Jr., Coventry, Connecticut 06238 (US)
(74) Representative: Samuels, Adrian James

(57) **Abstract**

A computerized method for marketing components, particularly aircraft engine components, for execution on a web-base system with Internet connections to customers and suppliers is disclosed. The marketing method includes receiving a request for specified components from a customer, searching an inventory and offering the component to the customer if available, and conducting a reverse auction among a plurality of suppliers if a component is not available in inventory. The system disclosed for implementing the method allows for proxy bids from suppliers and interactive bidding among a plurality of suppliers.

## Description

This invention relates to an apparatus and method for obtaining components and more particularly to a computerized method and system which has particular utility in the sale of aircraft engine parts in a web-based environment.

Both new and used engine parts are utilized in the maintenance and overhaul of aircraft engines. Purchasers of engine parts are typically the aircraft owners and facilities that perform aircraft and engine maintenance and overhaul. The purchase and sale of parts can be an arduous endeavor for the customers involving multiple suppliers. These purchasers often have to procure such parts in a somewhat convoluted manner dependent upon the original equipment manufacturer (OEM), Federal Aviation Administration (FAA) overhaul approval and the current owner of the required new or used part. New parts are generally purchased from the OEM or it's distributors. Used parts are purchased from a variety of sources including brokers who have obtained various inventories and then offer parts for resale. Often parts have undergone inspections and repair to prepare them for immediate use and to create a more saleable inventory. Prices for used parts are often based on what the market will bear and prices for urgently needed parts are inflated due to the urgency. Prices are often further inflated due to broker-to-broker trading.

Used parts inventory availability may be published on part and inventory location services, but the customer must contact the inventory owner directly for pricing and order placement. When the part is not available from the first supplier, the customer must continue contacting additional suppliers until they are able to satisfy the requirement. Since new and used parts are supplied from different suppliers, the customer is usually required to deal with multiple suppliers rather than a single source. Overall, there is little opportunity for significant so-called "one-stop" shopping in aircraft engine parts. The procurement process is further complicated by the need for the customer to review technical data (i.e. part trace and FAA forms) on used parts.

It would be desirable to provide a single source for new and used parts that offers a high expectation of meeting part procurement requirements in an efficient manner.

It is an object of the present invention to provide a new and improved apparatus and method for obtaining components which has particular utility in marketing aircraft engine components.

When viewed from a first aspect, the present invention provides an apparatus for locating a component for an engine comprising:
means for receiving an input signal from a requesting entity corresponding to a requirement for said component, said input signal including data relating to at least one technical criterion for said component;
storage means for storing an inventory of available components, said storage means including means for storing data relevant to said criterion for said components;
comparison means for comparing said input signal against the inventory of available components to determine whether a component satisfying said criterion is available;
first output means arranged to output a first output signal to said requesting entity indicating that a suitable component is available in the event that a component satisfying said criterion is available;
second output means arranged to output a second output signal to a plurality of remote data processing apparatuses corresponding to alternative sources for said component in the event that a suitable component is not available, said second signal corresponding to a request for said component and including said data relating to said technical criterion;
means for receiving one or more third signals from those of said remote data processing apparatuses which indicate that a suitable component is available; and
selection means for selecting one of said alternative sources and outputting a fourth signal to the requesting entity, indicating that a suitable component in available form said alternative source.

When viewed from a second aspect, the invention provides a method of locating a component for an engine comprising:
receiving an input signal from a requesting entity corresponding to a requirement for said component, said input signal including data relating to at least one technical criterion for said component;
comparing said input signal against an inventory of available components stored in a storage means, said storage means storing data relevant to said criterion for said components, to determine whether a component satisfying said criterion is available;
outputting a first output signal from a first output means to said requesting entity indicating that a suitable component is available in the event that a component satisfying said criterion is available;
outputting a second output signal from a second output means to a plurality of remote data processing apparatuses corresponding to alternative sources for said component in the event that a suitable component is not available, said second signal corresponding to a request for said component and including said data relating to said technical criterion;
receiving third signals from those of said remote data processing apparatuses which indicate that a suitable component is available; and
selecting one of said alternative sources and outputting a fourth signal to the requesting entity, indicating that a suitable component in available form said alternative source.

Thus it will be seen that in accordance with the invention and method and apparatus for locating a component has a reverse auction capability for out-of-stock components.

Furthermore, preferred embodiments of the present invention are able to provide a method and apparatus for expeditious and efficient procurement of used components with selective availability of real time competitive market pricing.

Thus at least preferred embodiments of the invention provide a method and apparatus which affords a supplier increased inventory availability without a commensurate increase in inventory carrying costs, i.e., a "virtual" inventory.

Also disclosed is an advantageous method for marketing components which includes receiving a request for a specified component from a customer and searching inventory information, if any, to determine whether the component is available from inventory. The component is offered to the customer if it is available from inventory. If the component is not available from inventory, a reverse auction is conducted among a plurality of suppliers to locate the specified component to offer to the customer. In one embodiment of the invention, the reverse auction is conducted by notifying a plurality of suppliers of a request for the component, receiving bids for a proposed sale of the component, and determining whether to offer the bid component to the customer.

In a preferred embodiment of the invention the components are aircraft engine components and the request for a specified component includes identified criteria with the bids for a proposed sale of a component including the particular criteria for such component.

The invention also extends to computer software for carrying out the methods set out hereinabove, whether or not embodied on a carrier.

Certain preferred embodiments of the invention will now be described, by way of example only, with reference to the accompanying drawings in which:
Figure 1 is a flowchart of steps performed in a computerized method in accordance with the present invention for marketing engine components;
Figure 2 which includes Figures 2A and 2B are flowcharts of steps performed in a reverse auction process of the type of Figure 1.
Figure 3 is a data flowchart of a selected sequence from an alternate embodiment of the method of Figure 1 including a reverse auction;
Figure 4 which includes Figures 4A-4C are graphical user interfaces for the sequence of Figure 3;
Figure 5 is a block diagram of a general purpose computer of the type for executing a computerized method in accordance with the present invention.

Although the method and system of the present invention have particular utility in the marketing of aircraft engine parts and are described herein in the context of marketing such parts, it is to be understood that the method and system may be utilized in the marketing of other types of components and items. While specific configurations in accordance with the present invention have been selected for illustration in the drawings, and the following description is drawn in specific terms for the purpose of describing these configurations, the description is not intended to limit the scope of the invention which is defined in the appended claims.

In the purchase and sale of aircraft engine parts, particularly used parts, various nomenclature is generally used and accepted by the industry to identify the status of the part and is used herein for purposes of describing the present invention. For example, a serviceable part" is a part that has come off an engine and can go back in service on an engine without repair. An "overhauled part" is a used part that has been overhauled to meet certain inspection criteria for overhauled parts as stated in the approved overhaul manual. Unless it is a life-limited part, the service time for an overhauled part is effectively treated as if the part were new. An "overhaulable part" is a used part that has the ability to be overhauled. A "repaired part" is a used part that has been repaired to meet certain inspection criteria for repaired parts. A "repairable part" is a used part that needs to be repaired to be serviceable. Generally, an overhaul procedure is more comprehensive than a repair procedure. A repaired part may not meet all overhaul criteria according to the overhaul manual but it may be acceptable to re-enter service according to the standards of the engine operator or airlines. An industry-recognized document that accompanies a used part is the FAA form 8130-3 (required by the FAA). Form 8130-3 is an airworthiness certification which identifies the status of the part, i.e., serviceable, overhauled, repaired, etc.

In a typical transaction, the supplier would receive a part request from a customer. The customer may be seeking a new part, a used part or a used part if a new part is not available. Customer procurement decisions are made based upon such considerations as cost (i.e., new part cost versus used part cost), life requirements and expectancy of the part, availability, and the urgency with which the part is needed.

In seeking a part, the customer may specify certain requirements or criteria for the part such as times/cycles, overhaul condition, trace, overhauler, etc. Criteria specifying "times/cycles" relates to life-limited parts. Rotating parts such as a disk, hub or shaft are time-limited parts and cycle-limited parts. For example, the average disk may be limited to 30,000 hours of operation and 15,000 cycles so as the hours and cycles are expended, the value of the part may decrease. Therefore, there may be time/cycle requirements based upon how the customer intends to use the part, e.g., how long it will fly, the conditions of use, etc.

The criteria of overhaul condition refers to the status of the part, e.g., the customer may insist that the part be overhauled or repaired, etc. The "overhauler" is the entity that certifies the overhaul on the 8130 form and the customer might only want to accept overhauled parts from certain overhaul facilities such as Pratt & Whitney. Therefore, the overhauler entity may be a requirement for the part.

Trace" is a significant criteria and relates to the ability to trace (and document) the part back in time, e.g., to the last owner/operator of the part or a complete history of the part back to the OEM. Since multiple brokers could be involved with a part, the customer typically wants to know the last owner, the last operator, and the specific engine from which the part was removed. The customer may also require a certification from the owner that the part was purchased from an OEM and that the part was not subject to stress such as that caused by accident or fire. Parts that are not manufactured by an OEM are referred to as "PMA parts." "PMA" is an abbreviation for Parts Manufacturing Authority which is authorization by the FAA for a manufacturer to manufacture certain parts. If a part is a PMA part, the customer typically would want that information.

Upon receiving the customer's request for a part with specified criteria, the supplier would search its new parts and/or used parts inventories for the requested part. Available parts that do not meet all the customer's criteria may nevertheless be offered to the customer thereby necessitating varying degrees of data review by the customer.

Prior to the present invention, if the supplier is unable to meet the customer's requirements from its inventories, the customer must continue contacting additional suppliers until it is able to satisfy its requirements. The process is further complicated and encumbered by the need of the customer to review technical data and documentation on proposed used parts (e.g., part trace data and documentation, FAA forms, etc.) in evaluating the proposed parts from each supplier. In the sale of used engine parts, the associated documentation is important and the quality of the documentation very often accounts for the market value of the part.

In the present business method, one-stop shopping is provided with a high probability of satisfying requirements in an efficient, convenient manner. The present method is preferably implemented in software and embodied in an online WEB-based system for the marketing of new and used engine parts. The customer's part request including part criteria is received electronically via the Internet (or other link) by the primary supplier such as an OEM. The system searches a new part inventory database for the part and a used part inventory database for a used part if a used part has been requested or a new part is not available in inventory.

If the system identifies a new part in inventory, the part is offered to the customer at the asking price. Otherwise, if the system identifies a used part in inventory which meets the customer's criteria, the used part is offered to the customer. If the system identifies a used part in inventory that does not meet the customer's criteria, the system will offer the part to the customer if the characteristics of the part might be an alternative to the customer's stated criteria.

If the primary supplier is unable to offer a part in response to the customer's request or the customer has refused the supplier's offered part, the system will operate a reverse auction among secondary suppliers (i.e., bidders) to obtain an acceptable part. In a reverse auction, secondary suppliers that have the requested part bid against each other to sell the part to the primary supplier. The reverse auction is operated over the Internet in the illustrated embodiment (with information being transmitted between the parties in data signals embodied in an appropriate transmission medium) although other links may be utilized. The reverse auction will be initiated and completed within a short time period after the failure to provide an acceptable part from the primary suppliers inventory, e.g., within forty-eight hours of receiving the customer's request for the part. In this manner, the reverse auction is an invisible, seamless component of the primary supplier's response to the customer's request. The availability of parts from the reverse auction creates a "virtual" inventory for the primary supplier. In an alternate embodiment of the present invention, the primary supplier does not maintain an inventory of parts and obtains its parts through a reverse auction upon request.

In operating the reverse auction, bidders are notified by email of the part requirements or criteria to be bid. At a set time, the bidders log on using a personal identification number (PIN) and password, review the requirements and prepare to bid when the reverse auction begins. In a preferred embodiment, reverse auctions are conducted regularly at a predetermined time, e.g., auction are held every business day from 12:00-2:00 p.m. At the initiation of the reverse auction, the system may enter the opening price as a target bid price. The target bid price is based on certain conditions and previous price history. Alternately, the opening bid may be entered by a bidder. The system also sets the minimum variation or increment required between bids based on a percentage of the estimated price and/or a fixed dollar amount.

Conditions of the auction require that the bidder have the part available for sale and agrees to sell at its bid price. If a bidder cannot produce the part that meets its bid price and conditions, the bidder will be disqualified from future auctions. The bidders are apprised that a buy/order may not be placed for the lowest bid part but that there is a need for the requested part and there is the bona fide intention to make a purchase only if all conditions are met.

A bidder may enter bids as often as it wishes but each bid must be lower than its last bid by at least the minimum bid increment allowed. A bidder has several options for entering a bid. In one option, the bidder may enter a price and state the part conditions and that the conditions meet the requested requirements or criteria. If a lower price (i.e., bid) has been entered that meets or exceeds the requested criteria, the bidder will see the posting of the lower bid and will have the opportunity to rebid at a lower price.

A bidders access to the bid of another supplier is limited. Each bidder will only see the bid from the next lowest bidder and must inturn bid lower in order to see the entry of any additional lower bidder. This limited access to bids will prevent a bidder from entering the system and entering one high bid and being able to determine selling prices for the requested part without having actually made a valid offer themselves.

Initially the bidder may also enter a bid by entering an opening price and a minimum price. The system will rebid automatically for the bidder and enter lower bids by the established incremental amount until the bidder's minimum price is reached. This type of bid entry and automatic rebid will allow the bidder to log off from the auction yet still maintain a bidding presence. When the minimum price is reached, the bidder will be notified by E-mail and will be given the opportunity to re-enter the auction and make additional bids.

The auction is run for a predetermined period. As can be appreciated, such an on-line reverse auction affords real time competitive market pricing of the particular part. If acceptable parts are bid, the "best fit" to the customer's request with the lowest bid price is offered to the customer at an asking price. The customer is shown the pedigree of the part (e.g., the criteria requested by the customer), From 8130-3 and other necessary documentation as may be requested such as on/off logs, flight records, and overhaul history of the engine. If the customer accepts the price and part, the customer enters an order and the order is filled.

If the customer accepts the pedigree but wishes to negotiate price, the system will accept a price offer from the customer provided the customer agrees to buy the part at its offer price (i.e., the customer must enter a conditional order into the system). If the customer's price offer is higher than the lowest system price, the system will accept the offer, execute the conditional order and initiate the delivery of the part.

The foregoing method is preferably implemented in software for execution on general purpose computers such as the type illustrated in Figure 5. The program code may be written in a variety of programming languages (such as HTML, XML, JAVA, C++ to execute on the computer processor 14 within the computer 12. The computer may also contain a memory 13 for storing program code and calculated data, a visual display screen 15 for displaying various information, keyboard 16 and mouse 17 that both used to input information to the processor and memory and a connection 18 for access to the Internet. These various devices are connected by a bus 19.

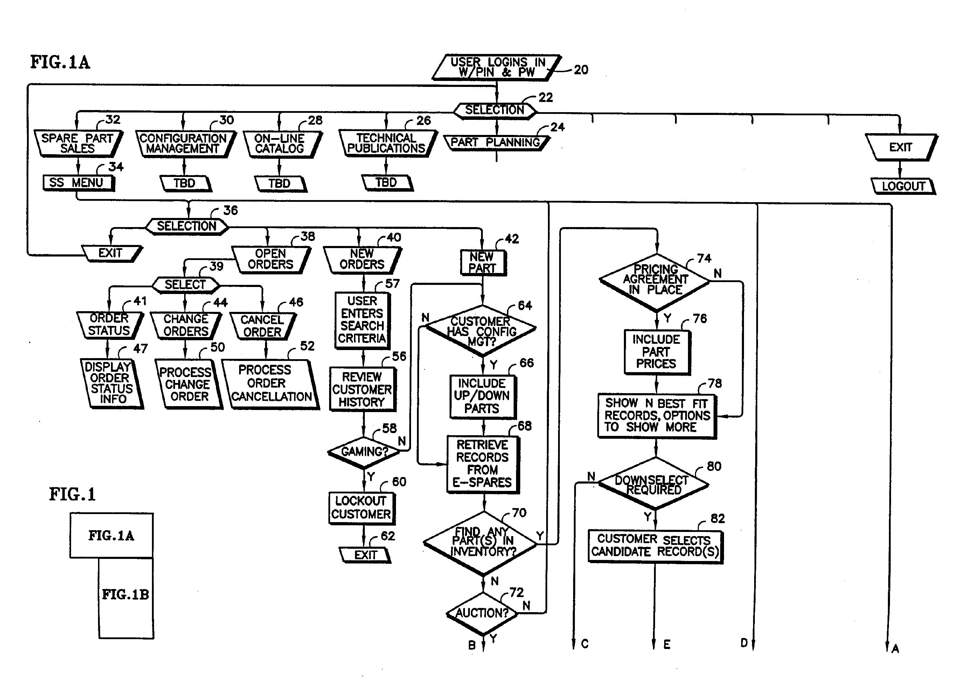

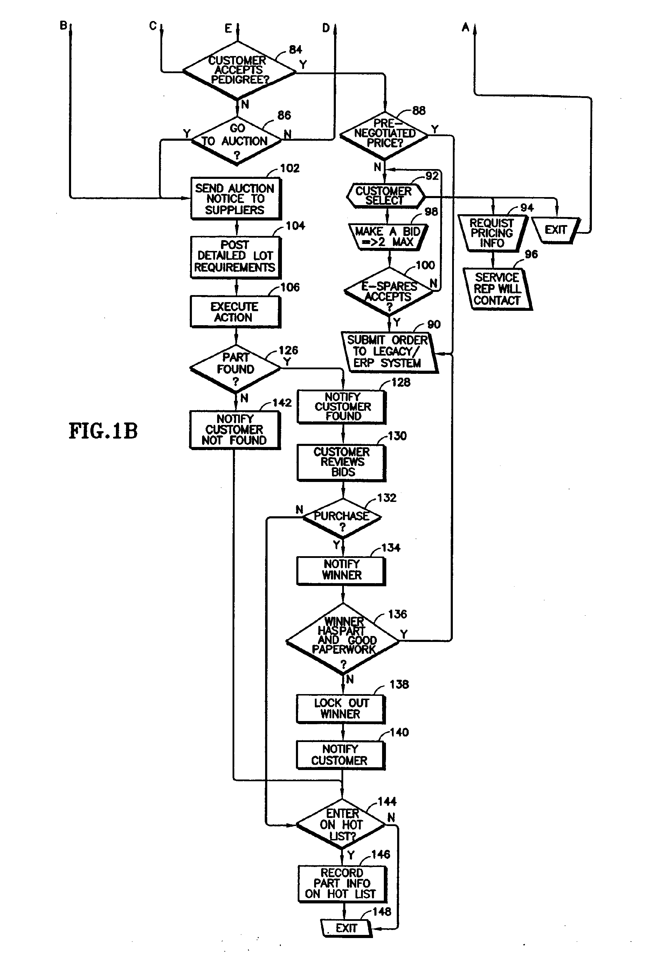

Referring to Figure 1, there illustrated is a flowchart of steps performed in an exemplary embodiment of a software program for employing the method of the present invention for marketing engine components. In the entry step 20, the customer connects to the web page of the primary supplier and logs in with a password and personal identification number. The customer is presented with a selection step 22 of related online services such as part planning 24, technical publications 26, an online catalog 28, configuration management 30 and spare part sales 32.

The customer selects the spare parts sales service 32 and is presented at 34 with a serviceable sales menu which is the menu for new and used engine parts. At step 36 the customer selects whether to inquire about an open order at 38, place a new order for a used part at 40 or place an order for a new part at 42. Under the open orders selection, the customer may select at step 40 whether to inquire about the status of an existing order at 42, change an existing order at 44 or cancel an order at 46. Selection of order status 42 provides the customer with a display of order status information 46 such as shipping data, a link to track shipments, etc. Selection of change order 44 presents a screen for processing a change order at 50 such as reducing the number of parts in an order. The cancel order 46 selection presents a screen for processing an order cancellation at 52.

Upon selection of the new order selection 40 for placing an order for a used part, at step 54 the customer enters information on the part requested including the part number and any requirements or criteria such as times, cycles, values, trace requirements, overhauler limitations, etc.

At step 56 the system reviews the customer's history, if any, for information such as does this customer require overhaul parts from a specific supplier, did the customer ask for the same part recently, etc. At step 58 the order is reviewed for gaming." Gaming refers to activity where a customer may make several orders for the same part on various days to see if the price changes or for other nonproductive reasons. If it is determined that the customer is gaming, the order may be locked out at step 60 or the customer may be informed that it recently received information on the same part and this customer exits the system at step 62.

Upon determination that the customer is not gaming, the system queries a database at step 64 to determine if the customer has a configuration management agreement with the primary supplier. If so, at step 66 the system retrieves configuration management information on the requested part and provides it to the customer. Such information is generally technical information and may include the history of the part, whether the part is superseded or superceding (i.e., up/down part information), whether certain service bulletins apply to the part, etc. In aircraft engines, if a part is interchangeable, the interchangeable part may require a change to other material in the engine such as for example, a new set of bolts to go with the part. Configuration management information may also be very helpful in locating a used part. For example, the customer may be looking for part X and they are unable to find it so they are stymied. However, if part Y will interchangeably perform the same function, that information would be helpful so the customer may also search for part Y.

At step 68, the inventory records are retrieved from the database and are searched at step 70 to identify the requested part. The system also uses the configuration management data to search for interchangeable parts and for other parts that may be needed for installation so that those parts may also be offered to the customer.

If a part is not identified in inventory, a reverse auction is initiated at step 72. If a part is found in inventory, an agreement database is searched at step 74 to determine if a pricing agreement exists with the customer. If a pricing agreement is found, the pricing information is included with the part information at step 76. Pricing agreements concerning used parts are common and the price may be determined, for example, based upon a certain percentage of the current list price for the part.

At step 78 the part that best fits the customer's requirements is identified and information about the records on this part are also provided together with a price if a pricing agreement applies. Alternately, if a pricing agreement does not apply, an asking price may be identified at this time. At step 80, the customer may elect to "down select" and consider other parts in the supplier's inventory at step 82 and obtain information on the records of these parts. In the event no down select is required or the customer has selected another part to review, at step 84 the customer decides whether or not to accept the stated pedigree of the proposed part. If the pedigree is not accepted, the customer can elect at step 86 for the supplier to seek to find the part (i.e., a reverse auction) or select a search for a new part through steps 36 and 42.

If the customer accepts the pedigree of the part, the system determines at step 88 whether there is a pre-negotiated price. If there is a pre-negotiated price, a purchase order is initiated at step 90 such as through an enterprise resource planning system. If there is no pre-negotiated price or no stated price accepted by the customer, the customer may select at step 92 to request pricing information at step 94 which will initiate at step 96 a request for a service representative to contact the customer directly. Alternately, the customer may elect to make an offer for the part at step 98 which the system may accept or reject at step 100. If the offer is accepted, the system will initiate a purchase order according to step 90.

In the event the requested part is not found in inventory, the system will go to reverse auction at step 72 and in the event the customer does not accept any part(s) found in inventory, the system will initiate a reverse auction at step 86. The reverse auction is initiated by the primary supplier sending an E-mail notice to secondary suppliers notifying them of the reverse auction and part requirements. At step 104, the detailed requirements of the part request are posted on the primary supplier's web page for review by the secondary suppliers.

At a predetermined time, the bidders log on to the primary supplier's web page with a personal identification number and password. The bidders review the requirements and prepare to bid when the reverse auction begins. At the initiation of the reverse auction at step 106, an opening price is presented as a target bid to the bidders.

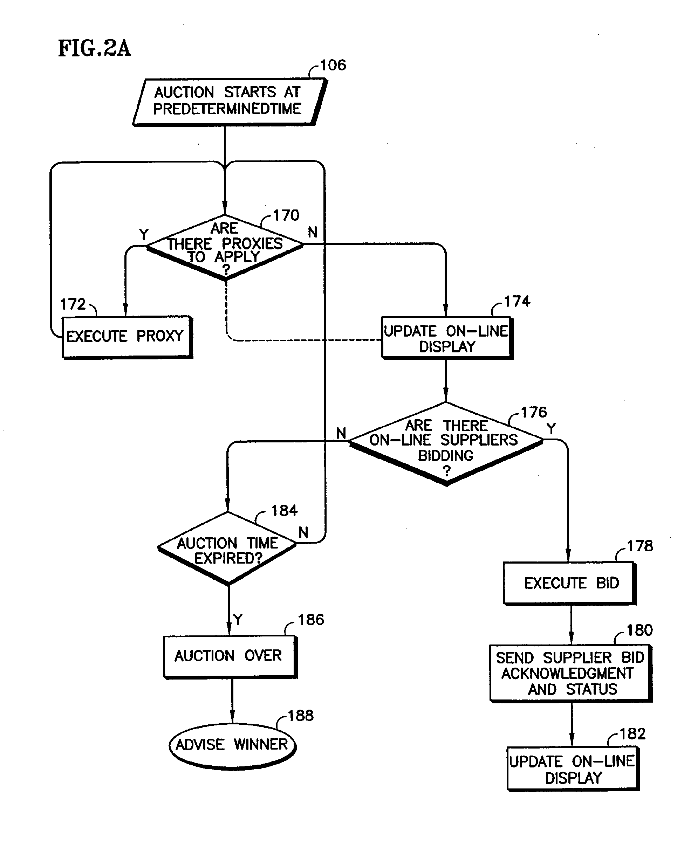

Referring to Figure 2A, the reverse auction may be executed as follows. The reverse auction is initiated at a predetermined time at 106 with a target bid price. The system determines at 170 whether there are any bid proxies for the requested part. (A proxy bid is a form of bid where the bidder does not have to participate online. The primary bidder enters an opening price and a minimum price and the system will rebid automatically for the proxy bidder and enter lower bids by the established incremental amount until the proxy bidder's minimum price is reached.) If an applicable proxy bid is available, the proxy bid is executed at 172 and the bid is entered in the auction and the system again determines whether there are any other proxies to apply. If there are a number of proxies, the system determines the bid to be entered by a determination analogous to a mini-auction between the proxy bids.

If there are no further proxy bids available at 170, the system updates online display information at 174 to accommodate the proxy bid or the initial target bid price and determines whether there are online bidders at 176. Online display information as updated at 174 is available for personnel overseeing the reverse auction.

If there are online bidders, the system enters the bid at 178 and at step 180 displays an acknowledgement screen to the respective bidder with bid status information. The system updates online display information at 182 and then determines again at 170 whether there are any applicable proxy bids. As the bidding process continues between the online bidders and any proxy bidders, the system repeats the sequences of steps of (i)170,172 and (ii)174-182.

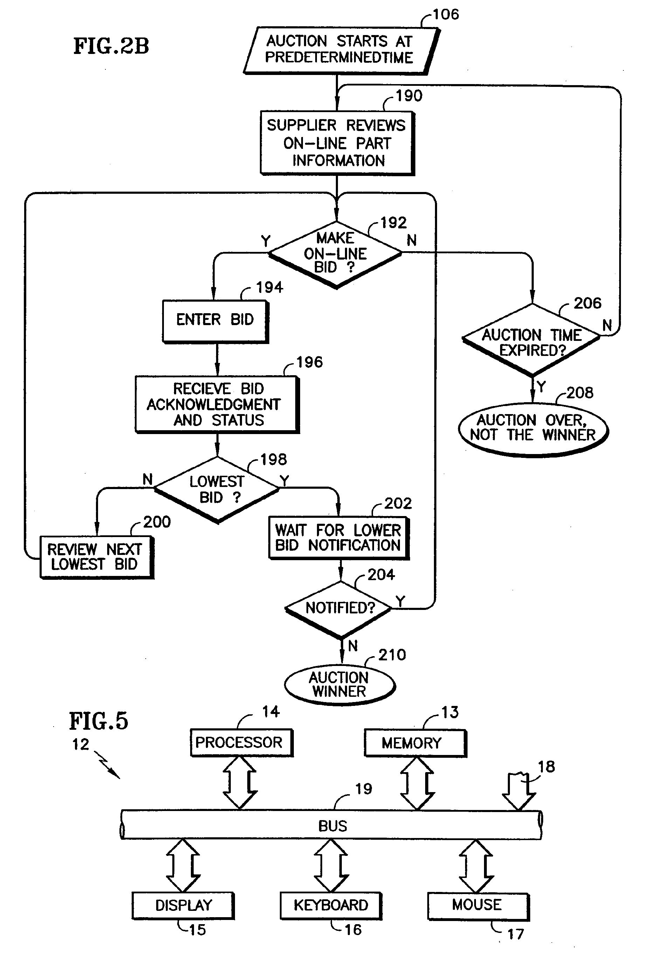

Referring to Figure 2B, after the reverse auction is initiated at 106, the supplier may review online at 190 information on the requested component and criteria. At 192 the supplier selects whether to make an online bid. If the supplier selects to make a bid, the supplier enters the bid at 194. The system determines at 176 (Fig. 2A) that there is an online bidder and executes the bid at 178. At 196, the bidder receives a bid acknowledgement and bid status display. The system determines whether the bid is the lowest bid at 198 and, if not, the bidder reviews the next lowest bid at 200 and selects whether to make another online bid at 192. If the bid is determined to be the lowest bid at 198, the bidder's activity is paused at 202 as long as it is the lowest bid while the system cycles through the sequence of stages for proxy bids and/or online bidders.

If the bidder is not eventually notified of a next lowest bidder, the bidder will be the winner at 210. If the bidder is notified at 204 of a next lowest bid, the bidder again selects at 192 whether to make another online bid. If the bidder elects to make another bid, the sequence recycles through steps 194-202 beginning with the entry of the bid at 194. If the bidder elects to not make a further bid, the system determines at 206 whether the auction time has expired. If the auction time has expired, the system determines at 202 that the auction is over and this particular bidder is not the winner. If the auction time has not expired, the bidder is returned at 190 to the online information display for the requested component.

Referring back to Figure 2A, if there are no online suppliers bidding, the system determines at 184 whether the time period of the auction has expired. If the time period has not expired, the system queries whether there are any applicable proxy bids at 170 and repeats the sequences previously described. If the time period has expired, the auction is terminated at 186 and winning bidder, if any, is notified at 188.

For purposes of explanation, an example bidding sequence is set forth below among bidders A,B,C&D where a part has been requested with certain criteria (e.g., it must be overhauled and have specified trace information) and the initial target price is $115.
- Bidder A enters a bid for $110.00: Bidder A is acknowledged and thanked.
- Bidder B enters a bid of $105.00: Bidder B is acknowledged and thanked. Bidder A sees a notice that they have been underbid and that the next lowest bid is $105.00.
- Bidder C enters a bid of $100.00: Bidder C is acknowledged and thanked. Bidder B sees a notice that they have been underbid and that the next lowest bid is $100.00.
- Bidder D enters a bid of $95.00: Bidder D is acknowledge and thanked. Bidder C sees a notice that they have been underbid and that the next lowest bid is $95.00.
- Bidder A enters a new bid of $103.00: Bidder A is acknowledged and sees a notice that the next lowest bid is $100.00.
- Bidder A enters a new bid of $97.00: Bidder A is acknowledged and sees a notice that the next lowest bid is $95.00.
- Bidder C enters a new bid of $90.00: Bidder C is acknowledged and thanked. Bidder D sees a notice that they have been underbid and that the next lowest bid is $90.00.
- No additional bids are accepted.: Bidder C has the most likely "best fit" and is asked to submit documentation.

Returning to Figure 1, at step 126 the system determines whether the requested part is available from the secondary suppliers. If the requested part is available, the customer is notified at step 128. At step 130, the customer reviews the part information for the part which represents the "best fit" to the part requirements. The customer also has the ability to look at other parts that were offered during the action if desired.

The decision whether to purchase the part is made at step 132 and the secondary supplier which bid that particular part (i.e., the winning bidder) is notified at step 134 that part is selected.

At step 136 the system confirms that the secondary supplier has the part and appropriate documentation to substantiate the customer's requirements. Preferably, the supplier scans the documentation into electronic form. The winning bidder sends the supporting documentation to a repository maintained by the primary supplier and the customer is granted access to view the documentation online. If the winning bidder does not have the part or the required documentation, the winning bidder may be locked out from future auctions at step 138 and the customer is notified at step 140. The customer may consider other bids reviewed at step 130 and repeat steps 132-136. If the winning secondary supplier has the part and appropriate documentation at step 136, a purchase order is initiated according to step 90.

In the event the requested part is not found as a result of the reverse auction, the customer is notified at step 142. In such event or in the event the part that is found is rejected by the customer at step 132 or it is determined at step 136 that the secondary supplier does not have the part or proper documentation, the system will decide whether to place the requested part on a so called hot list" at step 144 to be used for subsequent searches or later auctions. At this point the customer exits the web site at step 148 in the event the customer elects not to enter the requested part on the hot list at step 144, the customer then exists the web site at step 148.

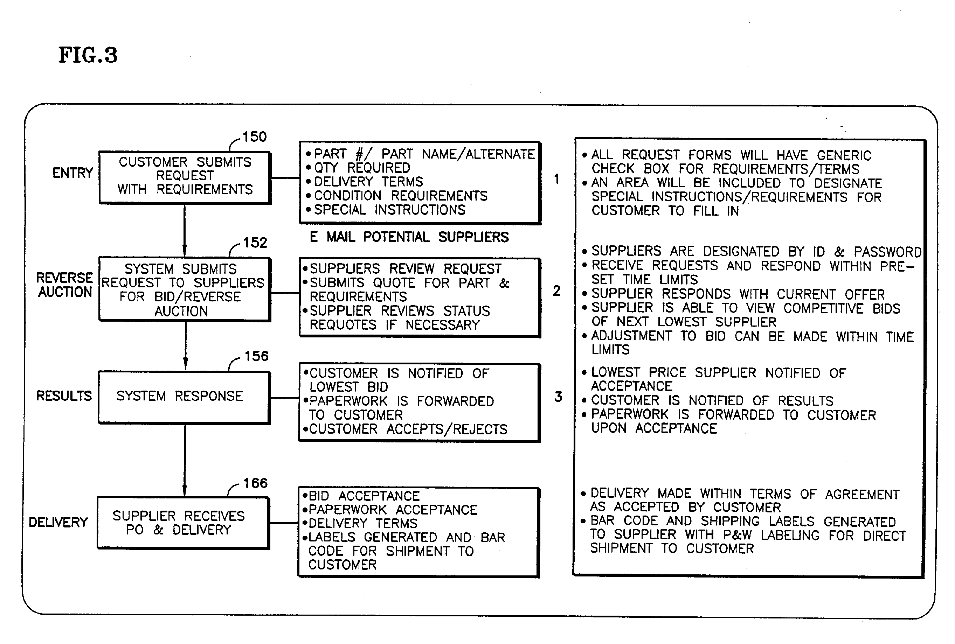

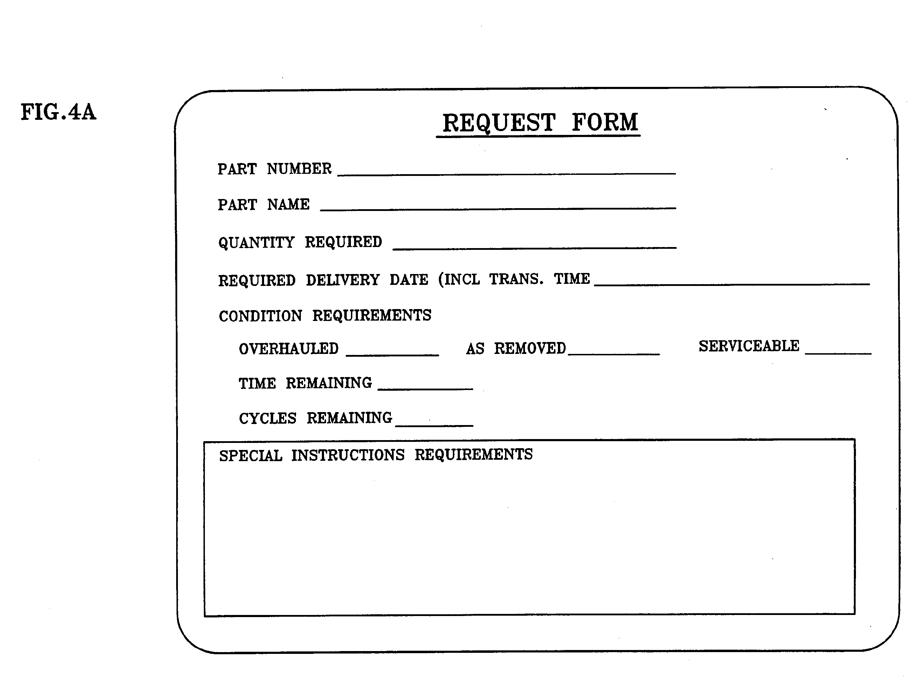

Referring to the flowchart of Figure 3 which shows a selected sequence in a method according to the present invention, at 150 the customer electronically submits a request for an engine part with specified part requirements. A graphical user interface (GUI) (entitled "Request Form") for submitting a part request is shown in Figure 4A for purposes of explanation and provides for the customer's entry of part number, part name, quantity required, delivery terms, part condition requirements and an area for special requirements.

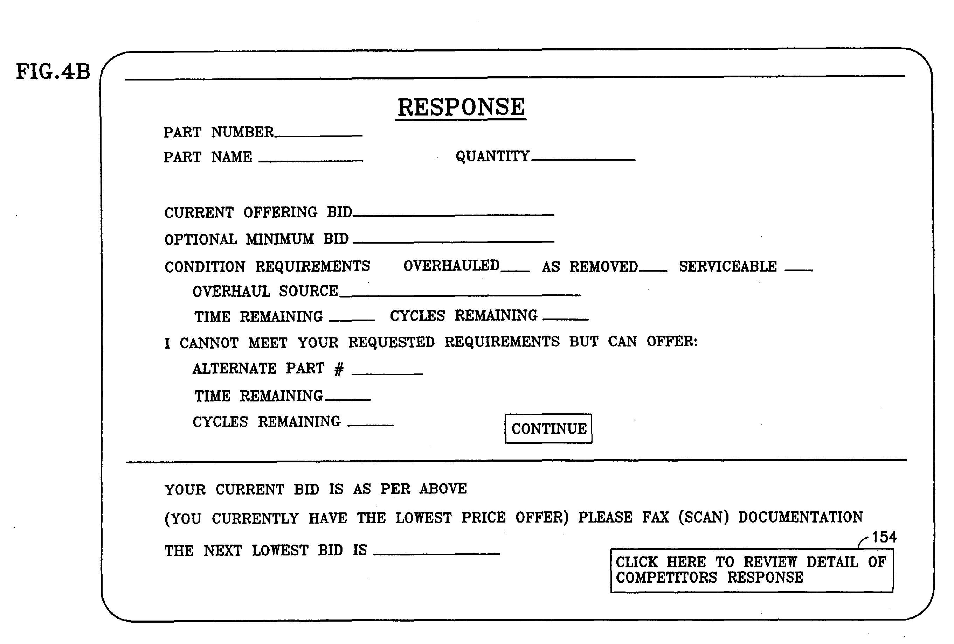

If a reverse auction is to be conducted at 152, the system submits a request or notice to secondary suppliers for a reverse auction. The secondary suppliers are provided with the part requirements. The suppliers review the requirements and respond within preset time limits. The process is iterative in that the supplier responds with a current offer and is able to view competitive bids of the next lowest supplier and upon review may requote and make adjustments to its bid within time limits. Figure 4B illustrates a representative GUI (entitled "Response") for this iterative process. The Response provides for a current offering bid and an optional minimum bid from the supplier as well as information on the condition of the offered part. If the supplier is unable to meet the requirements, it may offer an alternative part with time/cycle information. The bidder is informed of the next lowest bid to the current bid identified and may select additional information on the competitors' responses at 154.

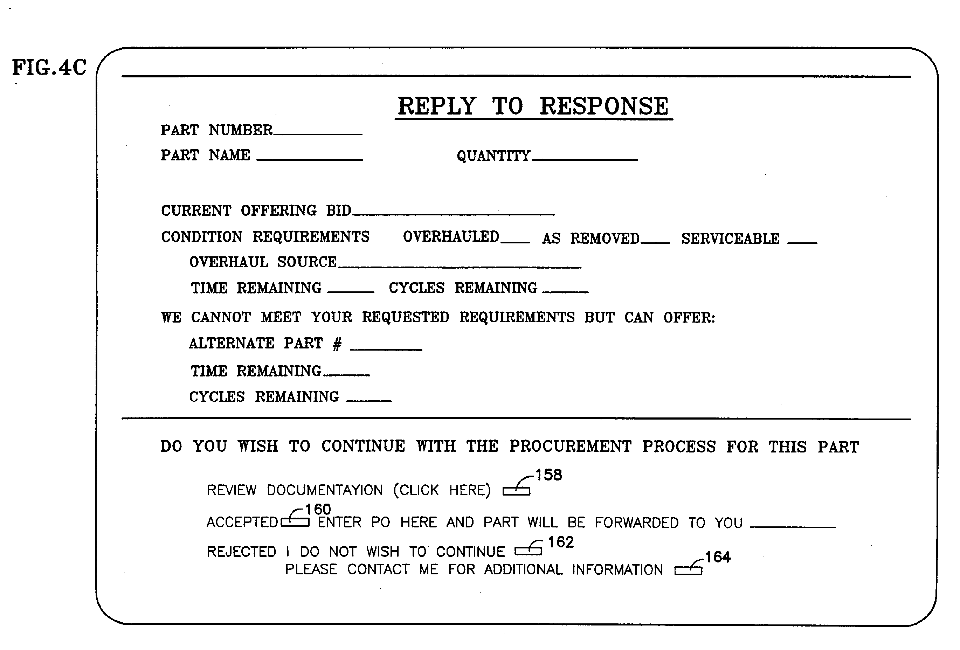

The system response to the results of the reverse auction at 156 (Figure 3) is to notify the customer of the lowest bid. Referring to the GUI (entitled "Reply or Request) Figure 4C, the customer is provided with the lowest bid and information on the requirements of the part. If the part does not meet the customer's requirements, there is a provision for offering an alternative part with information on the condition of the part. The customer may select to review documentation on this part at 158 or it may accept the part at 160 and request entry of a purchase order and shipment of the parts. The customer may alternatively select to discontinue the part request at 162 and request contact by the primary supplier for additional information at 164. It is understood that a wide variety of GUI's may be utilized at the numerous interactive steps of the process of Figure 1.

Upon acceptance of the part, the supplier receives a purchase order and delivery instructions at 166 (Figure 3). Delivery of the part is effected and, in the illustrated, embodiment labels are generated for direct shipment to the customer from the secondary supplier with the primary supplier's labeling.

As can be appreciated from the foregoing, a new and improved computerized method and system for marketing aircraft engine components has been described. Although the method and system described has particular utility in the marketing of aircraft engine parts, it can be appreciated that this method and system may be utilized in the marketing of other types of components and items in an online environment or otherwise.

The foregoing described method and system allows for expeditious and efficient procurement of used components with selective availability of real time competitive market pricing through the reverse auction capability. From the customer's prospective, it provides a single source for new and used parts that offers an increased expectation of meeting part procurement requirements in an efficient manner. From the primary supplier's perspective, it affords the supplier an increased inventory availability without a commensurate increase in inventory carrying costs (i.e., a virtual inventory).

As will be apparent to persons skilled in the art, various modifications and adaptations of the above-described method and system may be made without departure from the scope of the invention, which is defined in the appended claims.

## Claims

1. An apparatus for locating a component for an engine comprising:
means for receiving an input signal from a requesting entity corresponding to a requirement for said component, said input signal including data relating to at least one technical criterion for said component;
storage means for storing an inventory of available components, said storage means including means for storing data relevant to said criterion for said components;
comparison means for comparing said input signal against the inventory of available components to determine whether a component satisfying said criterion is available;
first output means arranged to output a first output signal to said requesting entity indicating that a suitable component is available in the event that a component satisfying said criterion is available;
second output means arranged to output a second output signal to a plurality of remote data processing apparatuses corresponding to alternative sources for said component in the event that a suitable component is not available, said second signal corresponding to a request for said component and including said data relating to said technical criterion;
means for receiving one or more third signals from those of said remote data processing apparatuses which indicate that a suitable component is available; and
selection means for selecting one of said alternative sources and outputting a fourth signal to the requesting entity, indicating that a suitable component in available form said alternative source.

2. Apparatus as claimed in claim 1 wherein said third signal comprises data relating to said criterion for the suitable available component.

3. Apparatus as claimed in claim 1 or 2 wherein said comparison means comprises means for determining whether an available component approximately meets said criterion.

4. Apparatus as claimed in claim 1, 2 or 3 wherein said third signal comprises data relating to any available component which approximately meets said criterion.

5. Apparatus as claimed in claim 4 wherein said fourth signal includes said data relating to any available component which approximately meets said criterion.

6. Apparatus as claimed in any preceding claim comprising means for allowing said requesting party to access documentation substantiating information relating to said technical criterion.

7. Apparatus as claimed in any preceding claim wherein repeatedly to receive a series of said third signals and to make said selection thereafter.

8. Apparatus as claimed in claim 7 wherein said receiving and selection means are arranged automatically to generate a repeated series of signals in place of the third signals from at least one of said alternative sources, the automatically generated signals including data relating to an assigned value, the value for each signal in the series being adjusted by a predetermined amount from a predetermined maximum to a predetermined minimum.

9. Apparatus as claimed in any preceding claim wherein said technical criterion is one from the group of overhaul condition, traceability, repair condition, age, and number of operational cycles experienced.

10. Apparatus as claimed in any preceding claim wherein more than one technical criterion is specified.

11. Apparatus as claimed in any preceding claim wherein said input signal is received via a computer network such as the Internet.

12. Apparatus as claimed in any preceding claim wherein said second output signal and said third signal are carried by a computer network such as the Internet.

13. Apparatus as claimed in any preceding claim wherein said second signal is output within a predetermined time of receiving said input signal.

14. A method of locating a component for an engine comprising:
receiving an input signal from a requesting entity corresponding to a requirement for said component, said input signal including data relating to at least one technical criterion for said component;
comparing said input signal against an inventory of available components stored in a storage means, said storage means storing data relevant to said criterion for said components, to determine whether a component satisfying said criterion is available;
outputting a first output signal from a first output means to said requesting entity indicating that a suitable component is available in the event that a component satisfying said criterion is available;
outputting a second output signal from a second output means to a plurality of remote data processing apparatuses corresponding to alternative sources for said component in the event that a suitable component is not available, said second signal corresponding to a request for said component and including said data relating to said technical criterion;
receiving third signals from those of said remote data processing apparatuses which indicate that a suitable component is available; and
selecting one of said alternative sources and outputting a fourth signal to the requesting entity, indicating that a suitable component in available form said alternative source.

15. Computer software which when executed on a data processing machine carries out the steps of the method of claim 14.

16. A data carrier comprising computer software as claimed in claim 15.

17. Apparatus as claimed in any of claims 1 to 13 comprising software for execution on a data processing system.

18. A computerized method for marketing aircraft engine components comprising the steps of:
receiving a request for a specified aircraft engine component from a customer with identified criteria for said component;
searching component inventory information to determine whether said component is available from an inventory;
offering said component to said customer upon determining availability of said component in said inventory; and conducting a reverse auction for said component among a plurality of suppliers upon determining non-availability of said component in said inventory.

19. The method of claim 18 wherein the step of conducting a reverse auction comprises:
notifying said plurality of suppliers of a request for said component with said identified criteria;
receiving a bid for a proposed sale of a bid component from a supplier; and
determining whether to offer a bid component for sale to said customer.

20. The method of claim 19 wherein the step of receiving a bid comprises receiving a bid with criteria information for said bid component.

21. The method of claim 20 wherein the step of determining whether to offer said bid component to a customer comprises determining whether to offer said bid component with said criteria information for said bid component to said customer.

22. The method of claim 19 comprising receiving a bid for a proposed sale of a bid component with criteria information for said bid component from each of multiple suppliers.

23. A computerized method for marketing used aircraft engine components for execution on a web-based system with Internet connections to customers and suppliers, comprising the steps of:
receiving from a customer a request for a specified used aircraft engine component having identified requirements of overhaul condition and trace information for said component;
conducting a reverse auction for said component among a plurality of suppliers which comprises notifying said plurality of suppliers of a request for said component with said identified criteria, receiving a plurality of bids for a proposed sale of a bid component from suppliers with criteria information of overhaul condition and trace information, and determining whether to offer a bid component for sale to said customer; and
notifying said customer of availability of a bid component.

24. The method of claim 22 or 23 wherein the step of determining whether to offer a bid component to a customer comprises comparing a bid component with criteria information to said component with identified criteria requested by said customer to determine if said component approximately meets said identified criteria.

25. The method of claim 24 which further comprises:
selecting a bid component with criteria information which represents a best-fit to said bid component with identified criteria requested by said customer; and
offering to sell said selected best-fit component to said customer.

26. The method of claim 25 which comprises providing criteria information on said best-fit component to said customer.

27. The method of claim 26 which comprises providing said customer access to documents substantiating said criteria information of said best-fit component.

28. The method of claim 27 wherein access is provided by an Internet connection to electronic copies of said documents.

29. The method of any of claims 25 to 28 wherein providing criteria information comprises providing information on overhaul condition of said best-fit component.

30. The method of any of claims 25 to 29 wherein providing criteria information comprises providing trace information on said best-fit component.

31. The method of any of claims 25 to 30 wherein providing criteria information comprises providing information on repair condition of said best-fit component.

32. The method of any of claims 25 to 31 wherein providing criteria information comprises providing times/cycles information on said best-fit component.

33. The method of claim 24 wherein said criteria information comprises overhaul condition and trace information requirements.

34. The method of any of claims 18 to 33 wherein the step of receiving a request for a specified aircraft engine component from a customer with identified criteria for said component comprises receiving a request for a component with the identified criteria being selected from a group of criteria comprising overhaul condition, trace information, and times/cycle requirements.

35. The method of any of claims 18 to 34 wherein the step of conducting a reverse auction is executed on a web-based system with an Internet connection to said plurality of suppliers.

36. The method of claim 35 wherein the step of receiving a request from a customer is executed on a web-based system with an Internet connection to said customer.

37. A computerized method for marketing components in a web-based environment comprising the steps of:
receiving a request through the Internet for a specified component from a customer;
searching component inventory information to determine whether said component is available from an inventory;
offering said component to said customer upon determining availability of said component in said inventory; and
conducting a reverse auction for said component through the Internet among a plurality of suppliers upon determining non-availability of said component in said inventory.

38. The method of any of claims 18 to 37 wherein the step of conducting a reverse auction comprises:
notifying said plurality of suppliers of a request for said component;
receiving a bid for a proposed sale of a bid component from a supplier; and
determining whether to offer a bid component for sale to said customer.

39. The method of claim 38 comprising receiving a bid for a proposed sale of a bid component from each of multiple suppliers.

40. The method of claim 22 or 39 comprising receiving iterative successive bids for a proposed sale of a bid component from some of said multiple suppliers.

41. The method of any of claims 23 to 40 wherein the step of receiving a plurality of bids for a proposed sale from a supplier or suppliers comprises receiving a proxy bid from a supplier for a proposed sale of a bid component with an opening price and a minimum price to allow automatic successive rebidding by an established incremental amount until reaching said minimum price or said supplier wins the reverse auction.

42. The method of any of claims 18 to 41 wherein the step of conducting a reverse auction is executed within a predetermined time period after the step of receiving a request for a specified component.

43. The method of claim 42 wherein the predetermined time period is no greater than forty-eight hours.

44. A sequence of computer data signals in executing a computerized method for marketing components comprising:
a first data signal embodied in a transmission medium from a customer to a primary supplier identifying a requested component with identified criteria;
a second data signal embodied in a transmission medium from a primary supplier to a plurality of secondary suppliers identifying said requested component with said identified criteria in said first data signal; and
a third data signal embodied in a transmission medium from one of said plurality of secondary suppliers to said primary supplier identifying a bid for a proposed sale of a bid component with component criteria, said third data signal being responsive to said requested component in second data signal.

45. The sequence of computer data signals of claim 44 wherein the requested component is an aircraft engine component.

46. The sequence of computer data signals of claim 45 wherein the identified criteria are overhaul condition and trace information.

47. The sequence of computer data signals of claim 44 wherein said third data signal identifies a proxy bid for a proposed sale of a bid component with an opening price and a minimum price.

48. The sequence of computer data signals of claim 44 comprising a fourth data signal embodied in a transmission medium from said primary supplier to said one of said plurality of secondary suppliers with status information on said bid for a proposed sale of a bid component.

49. The sequence of computer data signals of claim 44 comprising a fourth data signal embodied in a transmission medium from said primary supplier to said customer identifying a bid component with component criteria.

50. The sequence of computer data signals of claim 49 comprising a fifth data signal embodied in a transmission medium from said primary supplier to said one of said plurality of secondary suppliers with acceptance information on said bid for a bid component.
